Europäisches Patentamt

**European Patent Office**

**Office européen des brevets**

(11) Publication number: **0 167 476**
**A2**

(12) # EUROPEAN PATENT APPLICATION

(21) Application number: **85730053.7**

(22) Date of filing: **03.04.85**

(51) Int. Cl.⁴: **G 11 B 23/027**
**B 65 D 85/671**

(30) Priority: **05.07.84 US 627678**
**04.12.84 US 677919**

(43) Date of publication of application:
**08.01.86 Bulletin 86/2**

(84) Designated Contracting States:
**AT BE CH DE FR GB IT LI LU NL SE**

(71) Applicant: **Frederick, Larry M.**
**5538 Lawrence Court**
**Hamburg Michigan 48139(US)**

(72) Inventor: **Kreeger, Elsmer William**
**2975 Highland Road**
**Howell Michigan 48843(US)**

(74) Representative: **Butenschön, Antje, Dr.**
**Patentanwälte PFENNING, MEINIG & PARTNER**
**Kurfürstendamm 170**
**D-1000 Berlin 15(DE)**

(54) **Reel storage container.**

(57) A container for storing reels upon which magnetic tape is wound. The container comprises a body and a cover which are integrally connected by means of a hinge which permits pivotal movement of the cover with respect to the body such that the cover may snap lockingly engage and enclose the mouth of the container to seal the contents of the storage container therein.

EP 0 167 476 A2

## Reel Storage Container

The present invention relates to the storage of reels of the type have record-bearing media and, more particularly, to a container for storing such reels in a dust-free and moisture-proof environment.

Data processing commonly requires the extensive use of record-bearing media, such as magnetic tapes. Such tapes are commonly wound on individual spools or reels which are normally individually stored in reel containers adapted for compact storage and swift retrieval. An example of a reel tape storage container is disclosed in United States Patent No. 3 323 847 as comprising a molded plastic body having a cylindrical core secured between side flanges between which the magnetic tape is wound. The spool or reel is enclosed in a supplemental carrier formed of a molded plastic body having opposing shaped plates which form a casing around the reeled tape. United States Patents No. 3 310 178 and No. 3 696 935 recognize that a conservation of storage space may be had by exploiting the spool of the tape as part of the protective enclosure for its contents without the necessity of a separate container or case. This is accomplished by enclosing and stiffening the normally opened periphery ofa reel having a record-bearing medium with a flexible band having a special form of latch on its exterior. The band is desirably of a material which is stretchably drawn ar,ound the periphery of the reel to provide a relatively dust-proof seal. The latch which draws the band over the periphery of the reel is of a relatively nonstretchable material which tends to maintain the fastness of a seal.

Other prior art patents of which Applicant is aware are United States Patents No. 3 063 549, No. 3 346 099, No. 2 958 439, No. 3 485 416, No. 4 082 201, No. 4 127 189 and No. 4 314 651.

In today's modern economy the use of data processing requires the need for long-term storage of magnetic tapes numbering in the millions. It is essential in the storage of such magnetic tapes that the same be kept in a durst-free and water-proof environment. To ensure the integrity of stored tapes, it is common in many facilities to constantly remove stored tapes to test the same to ensure that the integrity of the tapes has been maintained and that the information stored thereon is safe for future use. To the knowledge of the Inventor, no one has devised a reel storage container which will safely maintain a magnetic tape wound about a reel in a safe, moisture-free environment wherein the container for so doing can be manufactured on a high- volume basis at a moderately low cost.

The present invention, which will be described subsequently in greater detail, comprises a reel storage container fabricated from a plastic material and including a cover which is integrally hinged to the container and movable between a first open position and a second closed, snap-on position wherein the cover is capable of effecting a hermetical sealing joint with the mouth of the container.

It is therefore an object of the present invention to provide a new and improved container for the storage of reels mounting magnetic tapes.

It is a further object of the present invention to provide such a container which is fabricated from a plastic material wherein the container is simple and inexpensive to manufacture.

It is a further object of the present invention to provide a container having an integral cover which sealingly engages the container to prevent the entry of dust and/or water vapor, thereby providing a secure environment for the magnetic tape stored therein.

Other Objects, advantages and applications of the present invention will become apparent to those skilled in the art of manufacturing reel storage containers when the accompanying description of several examples of the best modes contemplated for practicing the present invention is read in conjunction with the accompanying drawings.

The description herein makes reference to the accompanying drawings wherein like reference numerals refer to like parts throughout the several views, and wherein:

Fig. 1   is a top plan view of one example of an integral storage container and cover with the cover being illustrated in an open position;

Fig. 2   is a cross-sectional view taken along line 2-2 of Fig. 1;

Fig. 3   is an enlarged, fragmentary, cross-sectional view similar to Fig. 2 with the cover being illustrated in a closed position on top of the container;

Fig. 4   is an enlarged, fragmentary view of Fig. 2 illustrating the hinge connection between the cover and the container;

Fig. 5   is an end view of the hinge connection between the cover and the container as seen from line 5-5 of Fig. 3;

Fig. 6   is a top plan view on a reduced scale of a second example of an integral storage container and cover with the cover being illustrated in an opened position;

Fig. 7   is a fragmentary, cross-sectional view taken along line 7-7 of Fig. 6;

Fig. 8   is an enlarged, fragmentary, cross-sectional view taken along line 8-8 of Fig. 6 with the cover being illustrated in an opened position for illustrating the hinge connection between the cover and the container;

Fig. 9 is an enlarged, fragmentary, cross-sectional view similar to Fig. 8 illustrating the cover in an intermediate position; and

Fig.10 is an enlarged, fragmentary, cross-sectional view similar to Fig. 8 with the cover being illustrated in a closed position on top of the container.

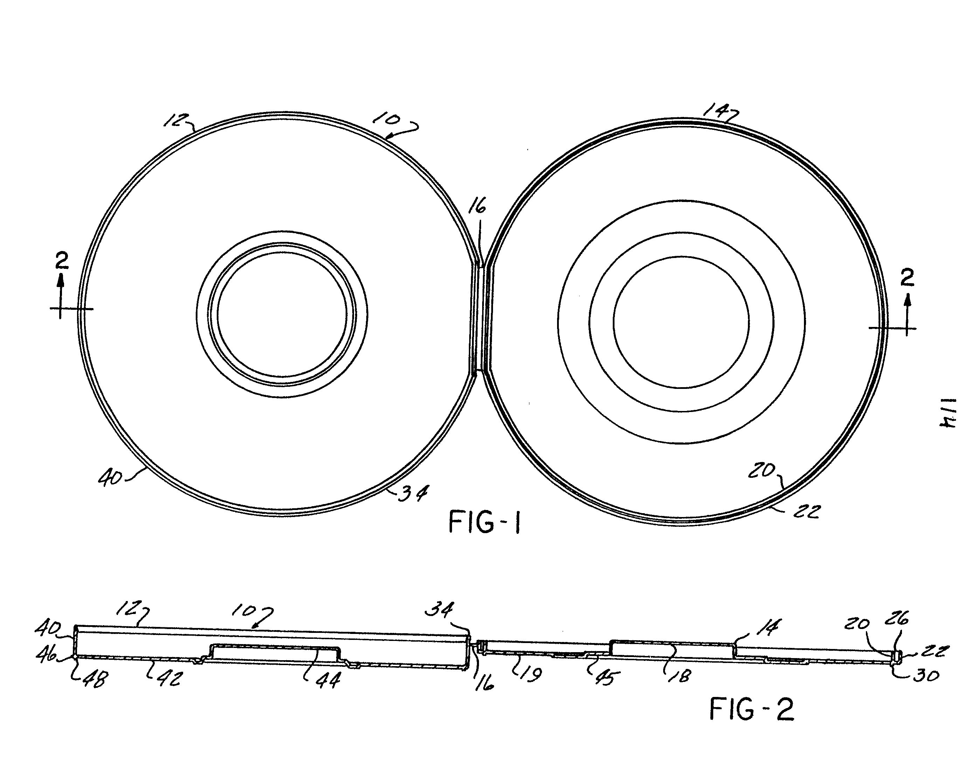

Referring now to the drawings and, in particular, to Figs. 1 and 2 wherein there is illustrated one example of the present invention in the form of a magnetic tape reel storage container 10 comprising a body 12 integrally connected to a cover 14 by means of a hinge member 16. While other materials may be used in the fabrication of the storage container 10, the preferred material is a plastic, such as polypropylene.

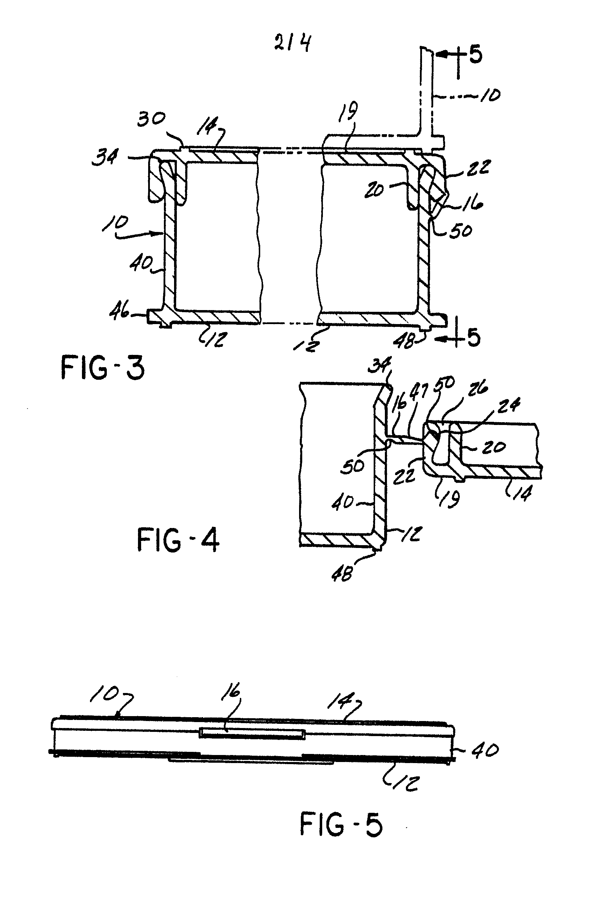

As can best be seen in Figs. 2 and 4, the cover 14 comprises a depressed central wall 18 integrally joined to a raised, inverted, groove-type rim having a top wall 19, an inner groove wall 20 and an outer peripheral wall 22 defining a groove 26. The outer peripheral wall 22 has an enlarged or thickened midsection 24 that narrows the width of the groove 26. The inner groove wall 20, the outer peripheral wall 22 and the groove 26 extend the full 360$^{\circ}$ about the cover 14. The top wall 19 of the cover 14 has an annular raised projection 30, the purpose of which will be described hereinafter.

The thickened mid-section 24 combined with the rim top wall 19 defines the inner face of the peripheral wall 22 as being preferably rounded to accommodate for hermetical sealing therewith the outwardly flared circular body lip 34 and rounded edge thereof. The body 12 is cup shaped having a peripheral wall 40 that terminates in the outwardly flared body lip portion 34 defining the mouth of the body 12. The circular wall 40 has an integral bottom wall 42 which in turn has a recessed mid-section 44 (Fig.2). The recessed mid-section 44 of the body 12 and the recessed section 16 of the cover 14 define reel engaging flanges adapted to center and secure the reel in place when the cover 14 is closed upon the body 12 as described hereinafter.

The recessed mid-section 44 terminates in a raised annular lip which matingly and stackingly engages a correspondingly formed annular recess 45 formed in the cover 14.

As can best be seen in Fig. 3, the lower portion of the body 12 is provided with an annular rim 46 which adds strength and rigidity to the body 12 while an annular leg extension 48 disposed near the peripheral edge of the bottom wall 42 cooperates with the aforementioned annular rim 30 on the cover 14 to permit stacking of the closed containers 10, one upon the other, as illustrated in phantom lines in Fig. 3. The annular rim 30 on the cover 14 laterally abuts the interior wall of the annular leg extension 48 and prevents lateral momement of the stacked containers 10. It should be noted that the annular rim 46 terminates on either end of the hinge member 16.

Referring now to Fig. 4 for a detailed description of the hinge member 16 connectiing the cover 14 to the container body 12, it can be seen that the hinge member 16 is essentially in an elongated flat strip of plastic material which in the typical embodiment is approximately 3 inches in length and 1/4 inch wide, being integrally attached to the peripheral wall 40 of the container body 12 immediately below the container lip 34 and to the outside surface of the peripheral wall 22 of the cover 14 at a position adjacent the intermediate thickened section 24.

The lower surface of the hinge 16 immediately adjacent the outside surface of the peripheral wall 40 is provided with a ball cut 50 that runs the full length of the hinge 16. The ball cut 50 results in a straight-line hinge along which the hinge member 16 will pivot. The use of a ball cut eliminates any sharp edges along the length of the hinge member 16, thereby providing a hinge point which will not have any tendency to break after extended periods of use.

It should be noted that the top surface of the hinge member 16 is inclined downwardly and narrows for a substantial portion 47 of the width of the hinge 16 toward its point of integral attachment with the outside surface of the peripheral wall 22. The purpose of the flattened portion 47 of the hinge member 16 over a greater width thereof eliminates a predetermined bending line whereby the hinge member 16 will rotate and bend about whatever portion of the hinge portion 47 that is necessary to facilitate bending and which is least likely to damage the hinge member 16 over extended periods of use.

It should be noted that the top surface, as viewed in Fig. 4 of the drawings, of the peripheral wall 22 is recessed and narrowed at its upper end 50' along the length of the wall 22 that corresponds to the full length of the hinge member 16. This permits the cover 14 to roll over into the locked position illustrated in Fig. 3. By reason of the structure described, the cover 14 is able to be forcibly lifted over the lip 34 of the body 12 and snapped in place by progressive engagement of the inner face of the wall 22 and the outer surface of the body lip 34, coupled with the fact that the inner groove wall 20 abuttingly and sealingly engages the inside surface of the body peripheral wall 40 below the flared lip 34, thereby sandwiching the lip 34 snugly and securely between the opposing inner surfaces of the groove walls 20 and 22, providing for double annular seals 360$^{\circ}$ about the annular groove 26.

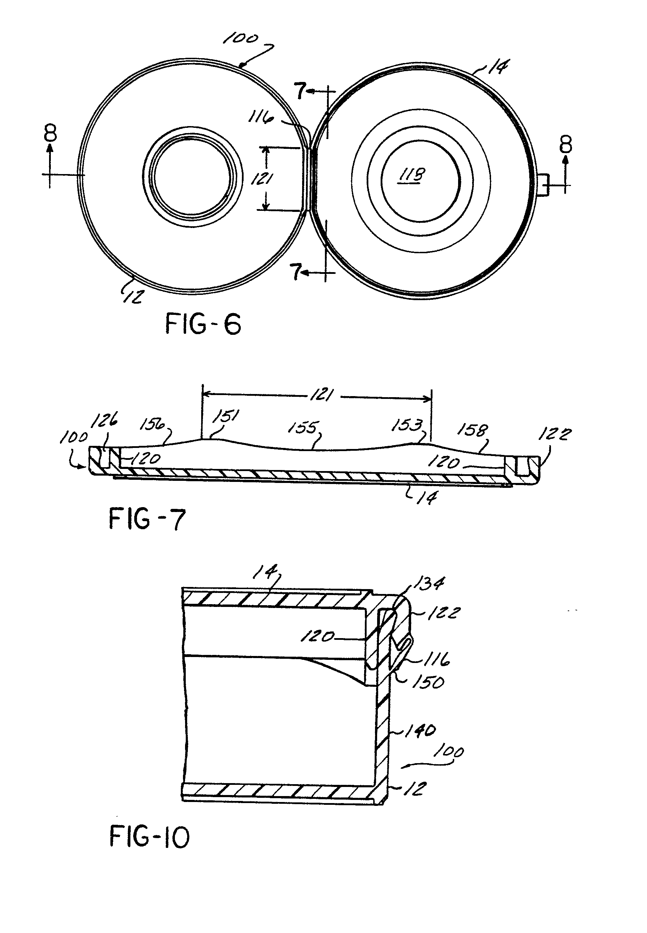

Referring now to Figs. 6 through 10 wherein there is illustrated a second example of the present invention in the form of a magnetic tape reel storage container 100. The container 100 is substantially identical to the container 10 described hereinbefore and comparable components are identified by the same numeral in both embodiments.

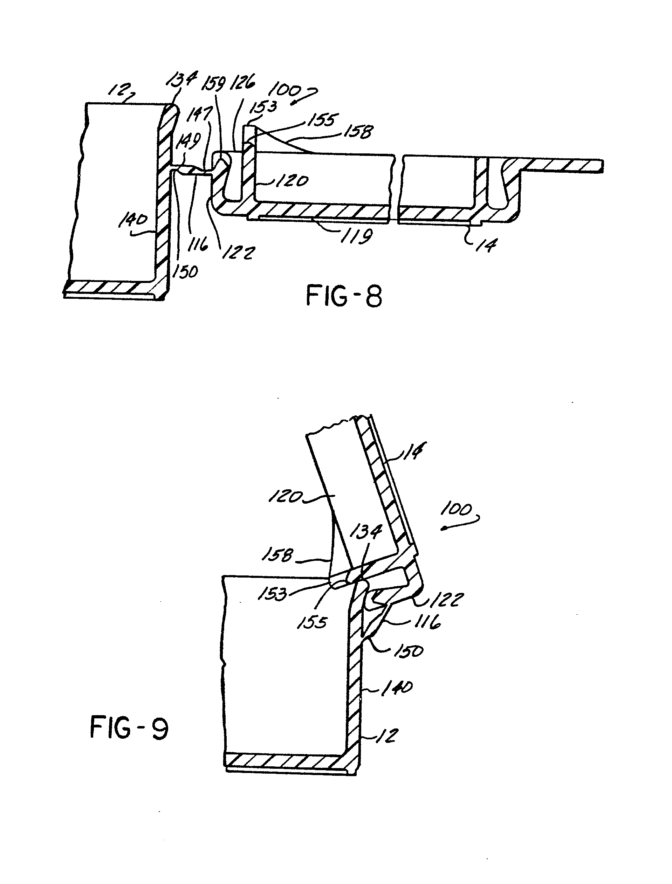

As can best be seen in Figs. 6, 7 and 8, the storage container 100 comprises a body 12 integrally connected to a cover 14 by means of a hinge member 116. The cover 14 comprises a depressed central

wall 118 (Fig. 6) integrally joined to a raised, inverted, grooved-Type rim having a top wall 119 (Fig. 8), an inner grooved wall 120 and an outer peripheral wall 122 defining a groove 126. The outer peripheral wall 122 has an enlarged or thickened midsection 124 that narrows the width of the groove 126 (Fig. 8). The inner grooved wall 120, the outer peripheral wall 122 and the groove 126 extend the full 360$^{\circ}$ about the cover 14.

The thickened midsection 124 on the inner face of the peripheral wall 122 is preferably rounded to accommodate for hermetical sealing with an outer flared circular body lip 134 formed on the outer peripheral wall 140 of the body 12. The body 12 of the container 100 is cup-shaped having a peripheral wall 140 that terminates in the aforementioned outwardly flared body lip portion 134 defining the mouth of the body 12.

Referring now to Figs. 6, 7 and 8, it can be seen that the hinge member 116 connecting the cover 14 to the body 12 is essentially an elongated flat strip of plastic material that is integrally attached to the peripheral wall 40 of the container body 12 i-mediately below the container lip 34 and to the outside surface of the peripheral wall 122 of the cover 14 at a position adjacent the intermediate thickened section 124.

The lower surface of the hinge 116 immediately adjacent the outer surface of the peripheral wall 40 is provided with a ball cut 150 that runs the full length of the hinge 116. The ball cut 150 results in a straightline hinge along which the hinge member 116 will pivot. The use of a ball cut eliminates any sharp edges along the length of the hinge member 116, thereby providing a hin-ge point which will not have any tendency to break after extended periods of use.

The top surface of the hinge member 116 is inclined downwardly along its mid portion 149 and terminates in a uniformly narrowed portion 147 (Fig. 8). Thus, as can best be seen in Fig. 8, the hinge member 116 has a ball cut adjacent the peripheral wall 140, a thickened midsection 149, a tapered section and a uniformly narrowed portion 147 adjacent the peripheral wall 122. The narrowed portion 147 eliminates any predetermined bending line, such that the hinge member 116 will rotate and bend about whatever section of the hinge portion 147 is necessary to facilitate bending and which is least likely to damage the hinge member 116 over extended periods of use.

Still referring to Figs. 7 and 8, it can be seen that the peripheral wall 122 is recessed and narrowed at its upper edge 159 along the length of the wall 122 that corresponds to the full length of the hinge member 116. It can also be seen that the corresponding length 121 of the grooved wall 120 extends upwardly beyond the height of the remaining portions fo the grooved wall 122. The grooved wall length 121 is elevated at a maximum amount at locations 151 and 153 which correspond to the opposite ends of the length of the hinge member 116. The length 121 of wall 120 has an intermediate portion 155 that is concaved downwardly between locations 151 and 153. The wall 120 also includes upwardly tapered sections 156 and 158 on opposite sides of the locations 151 and 153, respectively.

As indicated hereinbefore, the length of the grooved walls 120 and 122 that correspond with the length of the hinge member 116 as well as the corresponding length of the wall 140 follows a substantial straight line providing a simple means for hinging the cover 14 to the body 12.

As can be seen in Fig. 9, when the cover 14 is rotated counterclockwise (as viewed in Figs. 8 and 9), the elevated sections 151 and 153 of the grooved wall 122 pass over the lip 134 of the body wall 140 guiding the lip 134 into the groove 126. By providing the recessed upper edge 159, the cover 14 is able to pivot around the lip 134 with a minimum amount of projection of the wall 120 into the interior of the body 12. This minimizes the amount of possible interference between the wall 120 and the computer tape that is stored within the container body 12 when the cover 14 is in the closed position illustrated in Fig. 9.

As can best be seen in Figs. 6 and 8, the peripheral portion of the cover 14 diametrically opposed from the hinge member 116 is provided with a tab 160 which permits the user of the container to grasp the cover 14 and rotate the wall 122 outwardly to facilitate the disengagement of the cover 14 from the body 12.

It can thus be seen that the present invention provides a new and improved and simply designed container for storing reels upon which magnetic tapes are wound.

It should be unterstood by those skilled in the art of containers of the type disclosed herein

0167476

that other forms of such containers may be had, all coming within the spirit of the invention and the scope of the appended claims.

Claims

1. A container (10;100) for storing tape reels in a sealed environment, with a pair of open-mouthed, relatively stiff, engageable, cirvular, hollow members (12,14), one of said members (12) at its mouth having a peripheral edge (34;134) and the other of said members (14) at its mouth having a peripheral edge receiving groove (26;126) to removably and frictionally engage said edge (34;134); characterised in that the container comprises a hinge member (16;116) integrally connecting a selected length of the outer peripheral portions of each of said members (12,14) such that said other member (14) is rotatable with respect to said first member (12) from a first disengaged position to a second position wherein said other member groove (26;126) engages said edge (34;134), said hinge member (16;116) having a reduced thickness along its entire length at a portion immediately adjacent the peripheral portion of said one member (12) defining a first hinge line for permitting said hinge member (16;116) to rotate about said first hinge line toward and away from said one member (14), said hinge member (16;116) having a second reduced thickness along its length at a protion immediately adjacent the peripheral portion of said other member (14) defining a second hinge line for permitting said other member (14) to rotate about said second hinge line toward and away from said mouth of said one member (12).

2. The container according to Claim 1, characterised in that the thickness of said member (16;116) is reduced from a point immediately adjacent said other member (14) a sufficient distance along the width of said hinge to permit flexing of said hinge Member (16;116) at a location which is dependent upon the positioning of said other member (14) onto said one member (12).

3. The container according to Claim 1, characterised in that the outer peripheral wall (22;122) of said other member (14) defines the outer wall of said groove (26;126), said peripheral wall (22;122) having a uniform height throughout its entire circumferential length, the portion of said groove outer wall (22;122) associated with the selected length of said outer peripheral portion of said other member (14) being reduced in its height by an amount sufficient to permit the passage of said associated length of said last-mentioned wall by the corresponding portion of said one member edge (34;134) associated with said selected length of said hinge.

4. The container according to Claim 1, characterised in that said first and second members (12,14) have outer peripheral portions (40, 20, 22;140,120,122) which are of a uniform, circular periphery, the portions of said outer walls associated with said selected length of said outer peripheral portions of said members being non-circular and generally paralleling said first and second hinge lines, respectively of said peripheral portions of said first and second members.

5. The container according to Claim 1, characterised in that said edge is formed by an outward flare (134) of an integral, circular, peripheral wall (140), said groove (126) of said second member being defined by an inner first wall (120) and an outer second wall (122), the second wall having an intermittent buldge reducing the size of said groove (126) between said inner and outer walls and difining a flared surface on the interior of said outer wall, said outer wall (122) snugly engaging a parallel portion of said one member (12) circular wall (140) when said edge (134) is received in said groove (126), the outer portion of said flared surface snugly engaging said flared surface formed on said groove outer wall, providing a seal between said aforementioned engaged surfaces.

6. A container for storing computer tapes in a sealed environment, characterised in that the container comprises a pair of open-mouthed, relatively stiff, engageable, circular, hollow members (12,14), one of said members (12) at its mouth having a peripheral edge (134) and the other of said members (14) at its mouth having a peripheral edge receiving groove (126) to removably and functionally engage said edge; a hinge member (116) integrally connecting a selected lenght of the outer peripheral portion of each of said members (12,14) such that said other member (14) is rotatable from a first disengaged position to a second position wherein said one member edge (134) engages said other member groove (126), said edge being formed by an outward flare of an integral, circular, peripheral wall (140), said groove of said other member being defined by an inner first wall (120) and an outer second wall (122), the second wall having an intermittent buldge reducing the size of said groove (126) between said inner and outer walls and defining a flared surface on the interior of said outer wall, said outer wall (122) snugly engaging a prallel portion of said one member circular wall (140) when said edge (134) is received in said groove (126), the outer portion of said edge flared surface snugly engaging said flared surface formed on said groove outer wall (122), providing sealed engagements between said aforementioned engaged surfaces.

7. A container (100) for storing tape reels in a sealed environment, with a pair of open-mouthed, relatively stiff engageable, circular, hollow members (12,14), one of said members (12) at its mouth having a peripheral edge (134) and the other of said members (14) at its mouth having a peripheral edge receiving groove (126) to removably and frictionally engage said edge; characterised in that the container comprises a hinge member (116) integrally connecting a selected length of the outer peripheral portions of each of said members such that said other member (14) is rotatable with respect to said first member (12) from a first disengaged position to a second position wherein said other member groove (126) engages said edge (134), said hinge member (116) comprising an elongated rectangular strip having one lengthwise edge integrally connected to said one member (12), the other of said lengthwise edge being connected to an outer wall (122) of said peripheral edge receiving groove (126), the inner wall (120) of said receiving groove (126) having an elevated section generally corresponding to the length of said hinge, said elevated section overlying said one member peripheral edge as said other member (14) is rotated with respect to said one member (12)so as to guide said peripheral edge (134) of said one member (12) into said other member groove (126).

8. The container according to Claim 7, characterised in that the outer peripheral wall (122) of said other member (14) defines the outer wall of said groove (126), said peripheral wall having a uniform height throughout its entire circumferential length, the protion of said groove outer wall associated with the selected length of said outer peripheral portion of said other member (14) being reduces in its height by an amount sufficient to permit the passage of said associated length of said last-mentioned wall by the corresponding portion of said one member edge (134) associated with said selected length of said hinge.

9. The container according to Claim 7, characterised in that said first and second members (12, 14) have outer peripheral portions which are of a uniform, circular periphery, the portions of said outer walls associated with said selected length of said outer peripheral portions of said members being non-circular and generally paralleling said first and second hinge lines, respectively of said peripheral portions of said first and second members.

10. The container according to Claim 7, characterised in that said edge is formed by an outward flare (134) of an integral, circular, peripheral wall, said groove (126) of said second member (14) being defined by an inner first wall (120) and an outer second wall (122), the second wall having an intermittent buldge reducing the size of said groove (126) between said inner and outer walls and defining a flared surface on the interior of said outer wall, said outer wall (122) snugly engaging a parallel portion of said one member circular wall (140) when said edge (134) is received in said groove (126), the outer portion of said flared surface snugly engaging said flared surface formed on said groove outer wall (122), providing a seal between said aforementioned engaged surfaces.

11. A container (100) for storing computer tapes in a sealed environment, characterised in that the container comprises a pair of open-mouthed, relatively stiff, engageable, circular, hollow members (12,14), one of said members (12) at its mouth havong a peripheral edge (134) and the other of said members (14) at its mouth having a peripheral edge receiving groove (126) to removably and functionally engage said edge (134); a hinge member (116) integrally connecting a selected length of the outer peripheral portion of each of said members such that said other member (14) is rotatable from a first disengaged position to a second position wherein said one member edge (134) engages said other member groove (126), said edge being formed by an outward flare of an integral, circular, peripheral wall (140), said groove (126) of said other member (14) being defined by an inner first wall (120) and an outer second wall (122), the second wall having an intermittent buldge reducing the size of said groove between said inner and outer walls and defining a flared surface on the interior of said outer wall, said outer wall (122) snugly engaging a parallel portion of said one member circular wall (140) when said edge (134) is received in said groove (126), the outer portion of said edge flared surface snugly engaging said flared surface formed on said groove outer wall (122), providing sealed engagements between said aforementioned engaged surfaces; said hinge member (116) comprising an elongated rectangular strip having one lengthwise edge integrally connected to said one member (12), the other of said lengthwise edge being connected to an outer wall (122) of said peripheral edge receiving groove (126), the inner wall (120) of said receiving groove having an elevated section generally corresponding to the length of said hinge, said elevated section overlying said one member peripheral edge (134) as said other member (14) is rotated with respect to said one member (12) so as to guide said peripheral edge (134) of said one member into said other member groove (126).

FIG-1

FIG-2

0167476

214

FIG-3

FIG-4

FIG-5

FIG-6

FIG-7

FIG-10

FIG-8

FIG-9